**Europäisches Patentamt**

**European Patent Office**

**Office européen des brevets**

(19)

(11) Veröffentlichungsnummer : **0 110 016 B1**

(12) **EUROPÄISCHE PATENTSCHRIFT**

(45) Veröffentlichungstag der Patentschrift :
18.06.86

(21) Anmeldenummer : **83108228.4**

(22) Anmeldetag : **20.08.83**

(51) Int. Cl.⁴ : **F 25 J 3/02, C 01 B 4/00**

(54) **Verfahren zur Entnahme von dampfförmigem Sumpfprodukt von weniger als einem Mol pro Stunde aus einer Tieftemperatur-Rektifikationskolonne.**

(30) Priorität : 03.12.82 CH 7036/82

(43) Veröffentlichungstag der Anmeldung :
13.06.84 Patentblatt 84/24

(45) Bekanntmachung des Hinweises auf die Patenterteilung : 18.06.86 Patentblatt 86/25

(84) Benannte Vertragsstaaten :
DE FR GB IT

(56) Entgegenhaltungen :
LU-A-    40 059
US-A- 3 126 267
US-A- 3 861 216
CHEMICAL ABSTRACTS, Band 57, Nr. 9, 29. Oktober 1962, Spalte 10767h, Columbus, Ohio, USA, D.B. SMITH et al.: "Reconcentration of tritium by distillation"
Buck "Separation of Hydrogen Isotopes", Howard v. Roe, ACS Symposium Series, 68/1978, Seite 164

(73) Patentinhaber : GEBRÜDER SULZER AKTIENGE-SELLSCHAFT
Zürcherstrasse 9
CH-8401 Winterthur (CH)

(72) Erfinder : Schaub, Martin
Weinbergstrasse 80
CH-8400 Winterthur (CH)
Erfinder : Stücheli, Alexander, Dr.
Juchstrasse 10
CH-8400 Winterthur (CH)

(74) Vertreter : Dipl.-Ing. H. Marsch Dipl.-Ing. K. Sparing Dipl.-Phys.Dr. W.H. Röhl Patentanwälte
Rethelstrasse 123
D-4000 Düsseldorf (DE)

**Beschreibung**

Die Erfindung betrifft ein Verfahren zur Entnahme von dampfförmigem Sumpfprodukt von weniger als einem Mol pro Stunde aus einer Tieftemperatur-Rektifikationskolonne und eine Anlage zur Durchführung des Verfahrens.

Ein Verfahren zur kontinuierlichen Entnahme des Sumpfproduktes aus Tieftemperatur-Rektifikationskolonnen, bei welchen das Sumpfprodukt in grösseren Mengen anfällt, ist z. B. aus der US-A-3,126,267 bekannt. Das bekannte Verfahren, bei welchem Deuterium aus einem Wasserstoffstrom abgetrennt werden soll, wird in einer Anlage durchgeführt, in welcher auch die End-Rektifikationskolonne einen relativ grossen Durchsatz bezüglich der abgetrennten Deuteriummenge pro Zeiteinheit aufweist.

Ein derartiges Verfahren ist bei dem Anwendungsgebiet der Erfindung nicht möglich. Bei Verfahren dieser Art erfolgt die Entnahme nämlich mit Hilfe von Durchflussregel- oder Niveauregelsystemen. Die hierbei angewendeten Messinstrumente arbeiten jedoch bei der Entnahme von den bei der Erfindung zu entnehmenden extrem kleinen Sumpfproduktmengen nicht zuverlässig.

Daher war es bisher üblich, die Entnahme von Sumpfprodukt auf dem Anwendungsgebiet der Erfindung diskontinuierlich vorzunehmen. Ein solches Verfahren ist beispielsweise in dem Buch « Separation of Hydrogen Isotopes » von Howard K. Rae/ACS Symposium Series 68/1978 auf Seite 164 erwähnt.

Wesentliche Nachteile einer derartigen Verfahrensweise bestehen einerseits darin, dass die Rektifikation während der Entnahmeintervalle gestört wird, da sich die Gasbelastung der Kolonne kurzfristig ändert. Andererseits wird bei der Entnahme Produkt aus dem Gasraum der Kolonne abgesaugt, welches noch Kopfprodukt enthält.

Demgegenüber besteht die Aufgabe der Erfindung darin, ein Verfahren aufzufinden, welches die Entnahme von reinem Sumpfprodukt ermöglicht, und wobei ausserdem der Rektifikationsbetrieb nicht gestört wird.

Diese Aufgabe wird erfindungsgemäss mit Hilfe der im Kennzeichen des Anspruchs 1 angegebenen Merkmale gelöst.

Ausser der Gewinnung von reinem Sumpfprodukt kann durch die erfindungsgemässe kontinuierliche Entnahme der Betriebsinhalt des Verdampferraumes der Kolonne beträchtlich verkleinert werden.

Bei der Erfindung ist der Entnahmestrom proportional zum Druckanstieg in einem Vakuumtank, da sich hierin das Produkt wie ein ideales Gas verhält.

Die Dimensionierung des Volumens eines jeden Vakuumtanks ist durch die Entnahmemenge des Sumpfproduktes und die Entleerungszeit sowie die Genauigkeit der Druckmesszelle des Druckreglers bestimmt.

Bevorzugte Anwendungsgebiete der Erfindung sind Isotopentrennverfahren, insbesondere die Abtrennung von Tritium aus einem Wasserstoff-Isotope enthaltenden Gemisch.

Bekanntlich entsteht Tritium beispielsweise durch Neutronenanlagerung in Deuterium oder Schwerwasser oder durch ternäre Spaltung in Kernfusionsreaktoren. Zukünftige Kernfusionsreaktoren werden Deuterium und/oder Tritium als Brennstoff benützen. Aus radiotoxikologischen Gründen ist eine Entfernung des Tritiums aus dem Moderator- und Wärmetransportkreislauf von Schwerwasserreaktoren erforderlich. Für spezielle Anwendungen kommt auch eine Abtrennung von Tritium in Betracht, z. B. aus tritiumhaltigen Leichtwasserströmen, aus gasgekühlten graphitmoderierten Kernreaktoren, flüssigkeitsgekühlten Leichtwasser- und schnellen Brutreaktoren, aus kerntechnischen Anlagen, wie Wiederaufbereitungsanlagen von Brennstäben, aus tritierten Wasserstoffströmen von Abgas- oder Abluftanlagen von Forschungs- und Entwicklungsstätten, die mit Tritium arbeiten, oder bei denen Tritium entstehen kann.

Tritium wird als Spurenelement für viele Anwendungen benützt. Es findet beispielsweise auch in der Leuchtstoffindustrie Anwendung.

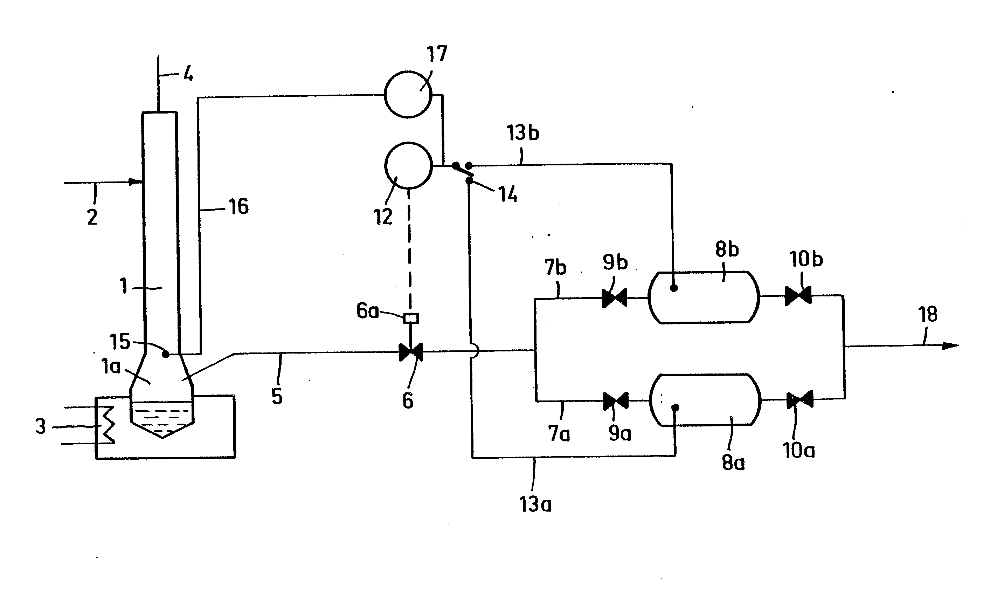

Im folgenden wird anhand eines in der Zeichnung dargestellten Ausführungsbeispiels die Erfindung erläutert.

Die Zeichnung zeigt in einem Fliesschema eine Anlage zur Durchführung des erfindungsgemässen Prozesses und zwar für die Entnahme von Tritium aus einer Tieftemperatur-Rektifikationskolonne unter Verwendung von zwei parallel geschalteten Vakuumtanks.

Die Rektifikationskolonne 1 kann beispielsweise als Filmkolonne, Spaltrohrkolonne, Füllkörperkolonne, die z. B. eine Raschigringfüllung oder eine Füllung von Packungskörpern mit geordneter Struktur aufweist, ausgebildet sein. Wesentlich ist, dass die Klonne aus gegebenen Gründen einen relativ kleinen Querschnitt von beispielsweise 1 cm aufweist.

Im vorliegenden Fall soll in der Kolonne 1 aus einem Gemisch von $DT + T_2$, das durch eine Zuleitung 2 an entsprechender Stelle in die Kolonne 1 eingeleitet wird, Tritium aus dem Verdampferraum 1a als Sumpfprodukt kontinuierlich entnommen werden.

Der Verdampferraum ist von einem Heizraum 3 umgeben.

Als Kopfprodukt wird durch eine Leitung 4 DT entnommen. Der Rücklaufkondensator ist nicht dargestellt, da er zum Verständnis der Erfindung nicht beiträgt.

An den Verdampferraum 1a ist eine Entnahmeleitung 5 angeschlossen, in welcher ein Regelventil 6 angeordnet ist.

An der Entnahmeleitung 5 sind zwei Zweigleitungen 7a und 7b angeschlossen, in welchen Vakuumtanks 8a und 8b, sowie vor und nach den Vakuumtanks Umschaltventile 9a und 9b, bzw. 10a und 10b angeordnet sind.

An den beiden Zweigleitungen 7a und 7b ist eine Entnahmeleitung 18 angeschlossen, die in nicht dargestellter Weise zu einem Verbraucher führt. Im vorliegenden Fall kann der Verbraucher z. B. ein in bekannter Weise ausgebildeter Absorptionskörper sein, in welchem das Tritium gespeichert wird.

Mit den Vakuumtanks 8a und 8b ist ein Druckregler 12 über Signalleitungen 13a bzw. 13b über einen Umschalter 14 verbunden, welcher auf das Stellglied 6a des Regelventils 6 einwirkt.

Im Verdampferraum 1a der Kolonne 1 ist ein Druckfühler 15 angeordnet, der mit einer Leitung 16 verbunden ist, in welcher ein Druckdifferenzmesser 17 angeordnet ist. Dieser Druckdifferenzmesser wird ebenfalls über den Umschalter 14 mit dem Vakuumtank 8a bzw. 8b verbunden.

Das Entnahmesystem steht unter Umgebungstemperatur.

Zu Beginn des Entnahmeprozesses sind die beiden Tanks 8a und 8b evakuiert. Nun wird während eines ersten Zeitintervalles der Tank 8a mit Tritium gefüllt. Hierzu wird das Regelventil 6 entsprechend der pro Zeiteinheit zu entnehmenden Tritiummenge geöffnet, Ventil 9a vollständig geöffnet, während die Ventile 10a, 9b und 10b geschlossen sind. Weiterhin wird der Vakuumtank 8a bei entsprechender Stellung des Umschalters 14 mit dem Druckregler 12 und dem Druckdifferenzmesser 17 verbunden.

In Abhängigkeit von der Regelabweichung wird vom Druckregler 12 über das Stellglied 6a das Regelventil 6 eingestellt. Nun strömt dampfförmiges Tritium in den Vakuumtank 8a, während der Vakuumtank 8b ausser Betrieb ist.

Wie bereits erwähnt, steigt der Druck im Vakuumtank 8a proportional zur Entnahmemenge an. Spätestens, wenn der Druck im Vakuumtank 8a dem Druck im Verdampferraum 1a der Kolonne nahezu entspricht, worüber die Druckdifferenz im Druckdifferenzmesser 17 Aufschluss gibt, wird das Ventil 9a geschlossen und das Ventil 10a geöffnet, so dass der Inhalt des Vakuumtanks 8a durch die Leitung 18 dem Verbraucher zugeführt wird.

Gleichzeitig wird das Ventil 9b geöffnet, Ventil 10b bleibt geschlossen und der Vakuumtank 8b wird mittels des Umschalters 14 mit dem Druckregler 12 und mit dem Druckdifferenzmesser 17 verbunden. Der Vakuumtank 8b wird in der zweiten Periode, die sich somit direkt an die erste Periode anschliesst mit Tritium aus der Rektifikationskolonne 1 analog zu der ersten Periode gefüllt.

Nachdem der Vakuumtank 8b gefüllt ist, wird der vorher evakuierte Vakuumtank 8a wieder in Betrieb genommen.

Durch die Länge des Zeitintervalles, in welchem jeweils ein Vakuumtank in Betrieb ist und der gesamten Betriebszeit, während der Tritium entnommen werden soll, ist die Frequenz der abwechselnden Füllung und Entleerung der Vakuumtanks bestimmt.

Im folgenden wird ein Zahlenbeispiel für einen Entnahmeprozess, wie er im Ausführungsbeispiel beschrieben ist, angegeben, dem ein analoges Zahlenbeispiel für einen diskontinuierlichen Entnahmeprozess gegenübergestellt wird.

Zahlenbeispiel

a) Kontinuierliche Entnahme
Entnahmemenge an Tritium beträgt :
$2 \cdot 10^6$ Ci/Jahr = 250 Ci/Stunde = 0.004 3 Mol/Stunde.
Die Gasbelastung am Kolonnensumpf beträgt 5 Mol/Stunde.

b) Diskontinuierliche Entnahme
Es soll alle 10 Stunden während 30 Sekunden 0.043 Mol Tritium entnommen werden.
Dieses würde einem Entnahmestrom von
$0.43 \cdot 3\,600/30$ Mol/Stunde = 5,16 Mol/Stunde entsprechen.

Dieses zeigt, dass bei diskontinuierlichem Betrieb mehr Produkt entzogen würde als die gesamte Gasbelastung in der Rektifikationskolonne ist. Die Folge wäre eine empfindliche Störung der Rektifikation und die Entnahme von nicht reinem Produkt.

Im Ausführungsbeispiel soll jeder Vakuumtank alle 5 Stunden entleert werden.

Der Kolonnendruck beträgt 1,5 bar, und die Umschaltung von einem Vakuumtank auf den anderen erfolgt bei 1 bar. Die Vakuumtankgrösse beträgt dann $0.48 \cdot 10^{-3}$ m³. Der sich hieraus ergebende Druckanstieg von 0.2 bar/Stunde ist noch gut messbar.

**Patentansprüche**

1. Verfahren zur Entnahme von dampfförmigem Sumpfprodukt von weniger als einem Mol pro Stunde aus einer Tieftemperatur-Rektifikationskolonne, dadurch gekennzeichnet, dass zur kontinuierlichen Entnahme von Sumpfprodukt zwei parallel geschaltete Vakuumtanks dienen, die abwechselnd gefüllt und entleert werden, derart, dass jeweils einer der Vakuumtanks mit dem Verdampfungsraum der Tieftemperatur-Rektifikationskolonne verbunden ist, wobei Sumpfprodukt in diesen Vakuumtank bei Umgebungstemperatur eingeleitet wird, und die Entnahmemenge mit Hilfe eines Druckreglers geregelt wird, wobei der Druck im Vakuumtank proportional zu der Entnahmemenge ansteigt, und dass spätestens, wenn nahezu ein Druckausgleich zwischen dem Druck in dem Vakuumtank und dem Druck im Verdampfungsraum der Tieftemperatur-Rektifikationskolonne erfolgt ist, die Verbindung zwischen diesem Vakuumtank und dem Verdampfungsraum der Kolonne unterbrochen wird, und die Verbindung zwischen dem Verdampfungsraum der Kolonne und dem anderen Vakuumtank hergestellt wird, während der Inhalt des ersten Vakuumtanks innerhalb einer gegenüber der Füllperiode wesentlich geringeren Zeitdauer einem Verbraucher zugeführt wird.

2. Vorrichtung zur Durchführung des Verfahrens nach Anspruch 1, dadurch gekennzeichnet, dass mit dem Verdampfungsraum der Tieftemperatur-Rektifikationskolonne eine Entnahmeleitung verbunden ist, und dass sich die Entnahmeleitung in zwei Zweigleitungen fortsetzt, in welchen jeweils ein Vakuumtank angeordnet ist, und dass in den Zweigleitungen jeweils vor und hinter dem Vakuumtank Umschaltventile angeordnet sind, und dass an die beiden Zweigleitungen eine gemeinsame, zu einem Verbraucher führende Entnahmeleitung angeordnet ist, und dass ein wahlweise den Vakuumbehältern zugeordneter Druckregler über einen Umschalter mit dem Regelorgan der Entnahmeleitung während der Füllperiode des jeweils in Betrieb stehenden Vakuumtanks verbunden ist.

**Claims**

1. A process for the removal of bottom product in vapour form of less than one mol per hour from a low-temperature rectifying column, characterised in that two parallel-connected vacuum tanks are operative for continuous removal of bottom product and are filled and emptied alternately so that one tank at a time is connected to the evaporation chamber of the column, the bottom product being introduced into such tank at ambient temperature, and the quantity removed is controlled by means of a pressure controller, the pressure in the vacuum tank rising proportionally to the quantity removed ; communication between such tank and the column evaporation chamber is interrupted at the latest when the pressures in the tank and in the column evaporation chamber are substantially equal ; and communication is established between the column evaporation chamber and the other vacuum tank while the contents of the first vacuum tank are supplied to a load for a period considerably shorter than the filling period.

2. An apparatus for performing the process according to claim 1, characterised in that a removal line is connected to the column evaporation chamber and continues as two branch lines in each of which a vacuum tank is disposed ; changeover valves are disposed before and after the vacuum tank in each branch line ; a common removal line extending to a load is associated with the two branch lines ; and a pressure controller selectably associated with the vacuum tanks is connected by way of a changeover device to the control element of the removal line during the filling period of whichever vacuum tank is in operation.

**Revendications**

1. Procédé pour prélever d'une colonne de rectification à basse température un produit résiduel sous forme de vapeur, à raison de moins d'une mole par heure, caractérisé par le fait que deux cuves de dépression branchées en parallèle servent au prélèvement continu de produit résiduel, ces cuves étant alternativement emplies et vidées de telle sorte que l'une, respective, des cuves de dépression soit reliée à la chambre d'évaporation de la colonne de rectification à basse température, du produit résiduel étant introduit dans cette cuve de dépression à la température ambiante et la quantité prélevée étant réglée à l'aide d'un régulateur de pression, la pression régnant dans la cuve de dépression croissant proportionnellement à la quantité prélevée ; et de telle sorte que, au plus tard lorsqu'il s'est quasiment établi un équilibre de pression entre la pression régnant dans la cuve de dépression et la pression régnant dans la chambre d'évaporation de la colonne de rectification à basse température, la liaison entre cette cuve de dépression et la chambre d'évaporation de la colonne soit rompue et la liaison entre la chambre d'évaporation de la colonne et l'autre cuve de dépression soit établie, cependant que le contenu de la première cuve de dépression est dirigé vers un appareil utilisateur, pendant un intervalle de temps notablement plus court que la période d'emplissage.

2. Dispositif pour la mise en œuvre du procédé selon la revendication 1, caractérisé par le fait qu'un conduit de prélèvement est raccordé à la chambre d'évaporation de la colonne de rectification à basse température ; par le fait que le conduit de prélèvement se prolonge par deux conduits de dérivation sur chacun desquels est installée une cuve de dépression ; par le fait que des valves d'inversion sont disposées sur chaque conduit de dérivation, devant et derrière la cuve de dépression ; par le fait qu'un conduit commun de prélèvement, gagnant un appareil utilisateur, se raccorde aux deux conduits de dérivation ; et par le fait qu'un régulateur de pression, associé sélectivement aux réservoirs de dépression, est relié par l'intermédiaire d'un commutateur à l'organe de réglage du conduit de prélèvement, au cours de la période d'emplissage de la cuve de dépression alors en fonction.